(19) Europäisches Patentamt
European Patent Office
Office européen des brevets

(11) EP 4 312 334 A1

(12) EUROPEAN PATENT APPLICATION

(43) Date of publication:
**31.01.2024 Bulletin 2024/05**

(21) Application number: **22382712.2**

(22) Date of filing: **26.07.2022**

(51) International Patent Classification (IPC):
***H02J 3/38*** (2006.01)

(52) Cooperative Patent Classification (CPC):
**H02J 3/381;** H02J 2300/24

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Gonvarri MS R&D SL
33470 Corvera - Asturias (ES)**

(72) Inventors:
• **PÉREZ GARCÍA, MIGUEL ÁNGEL
33208 Gijón (ES)**

• **ÁLVAREZ ANTÓN, JUAN CARLOS
33006 Oviedo (ES)**
• **GRANDA CANDÁS, JUAN CARLOS
33350 Gijón (ES)**
• **CARLEOS ARTIME, CARLOS ENRIQUE
33430 Candás (ES)**
• **PÉREZ CASTAÑO, LUIS
33013 Oviedo (ES)**
• **FERNÁNDEZ CASAS, ROBERTO
33211 Gijón (ES)**

(74) Representative: **Clarke, Modet y Cía., S.L.
C/ Suero de Quiñones 34-36
28002 Madrid (ES)**

(54) **SYSTEM AND METHOD FOR POWER SUPPLY OF A SOLAR TRACKER POSITION CONTROL SYSTEM**

(57) System and method for power supplying a solar tracker position control system. The power supply system (10) comprises:
a position control system (5), with a power input (8) connected in parallel with direct voltage lines (3) of a set of solar panels (4) and a voltage conversion unit (9) that obtains a direct supply voltage ($V^+$);
an alternating voltage generation unit (1) to generate an alternating voltage $V_{AC}$) of configurable amplitude;

a coupling unit (2) to couple the alternating voltage ($V_{AC}$) to the direct voltage lines (3);
a measurement unit (6) to obtain voltage measurements ($V_{string}$) on direct voltage lines (3); and
a power supply control unit (7) configured to couple or decouple the alternating voltage *($V_{AC}$)* to the direct voltage lines (3) and control the amplitude ($V_{ACp}$) of the alternating voltage *($V_{AC}$)* depending on the measurements (15) of the measurement unit (6).

Figure 23

**EP 4 312 334 A1**

**Description**

FIELD OF THE INVENTION

The present invention is encompassed in the field of systems for power supply of a solar tracker position control systems.

BACKGROUND OF THE INVENTION

A solar tracker is a system formed of one or several photovoltaic solar panels capable of being oriented in one or two axes to maximize the received solar energy. A set of photovoltaic solar panels connected in series and that produce a direct voltage under solar irradiation is called string. Each solar tracker can include one or more strings. Each string produces a direct voltage (string voltage) at its output, where the nominal values are usually 1000 V, 1200 V or 1500 V, and even 1800 V is contemplated. The string voltage is transported in output cables of the string (or string output direct voltage lines), which is a high-voltage wiring system that transports the energy produced by the string to the point where it will be treated.

A solar tracker position control system is a system formed of an actuator that is capable of acting on one or two axes of a solar tracker to produce its rotation and positioning according to established criteria or specific orders. The power supply system of the position control system is a system capable of providing enough energy to the position control system to move the solar tracker under normal operating conditions. The use of an energy backup system, capable of providing sufficient energy for the operation of the position control system in the absence or insufficiency of power supply provided by the power supply system, is common.

The power supply systems of solar tracker position control systems are designed to allow the movement of the solar trackers at all times and in all conditions (both to optimize energy production and to place the installation in the best safety conditions in the event of adverse weather conditions), to reduce the cost associated with energy backup systems (reduce their capacity, their size, use of low-cost storage technologies and increase their useful life), to reduce the cost of the position control system itself and to reduce the wiring of the position control system, thereby reducing material cost, installation cost and maintenance cost.

Different types of power supply systems are currently used for position control systems:

   a) Independently power supply system: It is characterized by having an additional wiring dedicated to the power supply of the control system, which can be done in direct or alternating and in which the use of the electrical network or centralized backup systems based on battery banks can concur. Advantageously, this type of power supply system guarantees the permanent operation of the position control system as long as there is an electrical network or central batteries with sufficient capacity, totally eliminating the need for an energy backup system in the position control system, and allows for a simple design of the position control system. However, it has the disadvantage that it is necessary to have two additional power supply wires for each position control system, which greatly increases the material, installation and maintenance costs.

   b) Solar power supply system and dedicated solar panel: These systems are characterized by having a small panel dedicated exclusively to the power supply of the position control system and from which all the energy it needs to perform all its functions is obtained. The panel is sized to be able to produce all that energy. This solution reduces the wiring of the power supply, makes the operation of the control system independent from the rest of the installation (providing more safety) and, as the power supply voltage is low, it allows a simple design of the position control system itself by reducing the solicitations on the power blocks and devices. However, this solution has its drawbacks, since it requires the inclusion of an additional panel in the solar tracker and it also does not have the possibility of night power supply, so it must include an energy backup system with the capacity to provide all the energy it needs to throughout the night cycle or at times when panel production is insufficient, which increases the cost of the control system and its maintenance. In the event of an adverse weather situation sustained over time that compromises the energy production of the dedicated panel for longer than the time set in the design, the energy backup system could be de-energized, which would leave the position control system inoperative.

   c) System with parasitic power supply on a string panel: One or more string panels are used for power supply, to which the position control system is connected as a parasite. This solution provides advantages and disadvantages similar to those listed for the system with solar power supply and dedicated panel, with the added advantage of not needing to include additional solar panels in the solar tracker, and the following additional disadvantages:

   -   As the parasitized panels form part of the string, the energy extraction has to be small so as not to force the entire string to work at a less optimal point from the energy point of view and compromise the net production of the system, so that it does not have ability to directly provide the energy that would be needed to move the solar tracker punctually and its function is to charge a battery and that it be the one in charge of providing the energy sustenance for the action of the control system.

- The fact that the position control system is connected to a relatively high voltage line complicates the power design of the control system.

d) System with parasitic power supply on the string output: The connection of the power supply of the position control system to the total voltage of the string reduces the risk of taking the string to a non-optimal point, since the load in parallel extracts relatively little energy from the total energy produced by the set and does not compromise overall efficiency. Advantageously, this solution: reduces power supply wiring; the use of all the string voltage interferes little with the energy management system of the set and does not put it at risk of taking it out of the MPP maximum power point; more instantaneous energy is available than a dedicated solar panel or parasitizing a group of panels in the string, which reduces the specifications of the energy backup system in terms of capacity; the fact of having all the voltage of the string reduces the duration of the strictly night period by an average of 45 minutes, which results in a lower need for energy storage in the energy backup system. However, it also has several drawbacks:

- High voltage is used (more than 1000 V in all cases, a standard of 1500 V and a future forecast of 1800 V), which makes the design of the power blocks of the position control system more expensive.

- In the event of an adverse weather situation sustained over time that compromises the energy production of the string for longer than the time set in the design, the energy backup system could be de-energized, which would leave the position control system inoperative.

Therefore, it is necessary to have a system for power supply of a position control system that solves the drawbacks of present power supply systems.

**Summary of the invention**

The invention refers to a system and a method for power supply of a solar tracker position control system.

The power system comprises a solar tracker position control system (which includes a set of solar panels connected in series), an alternating voltage generation unit, a coupling unit, a measurement unit, and a power supply control unit.

The position control system comprises a power supply input connected in parallel with output direct voltage lines from the solar panel set and a voltage conversion unit configured to obtain a direct power supply voltage from a voltage received through of the power supply input.

The alternating voltage generation unit is configured to generate an alternating voltage of configurable amplitude. Through the coupling unit, the alternating voltage is coupled to the direct voltage lines. The measurement unit is configured to obtain measurements on direct voltage lines including voltage measurements.

The power supply control unit is configured to couple or decouple the alternating voltage to the direct voltage lines and control the amplitude of the generated alternating voltage based on the measurements obtained by the measurement unit. The coupling or decoupling of the alternating voltage to the direct voltage lines can be done by controlling switches in the coupling unit and/or in the alternating voltage generation unit.

Another aspect of the present invention refers to a method for power supply of a solar tracker position control system. The method comprises connecting a power supply input of a solar tracker position control system in parallel with direct output lines of a set of solar panels of the solar tracker; converting a voltage received through the power supply input into a direct power supply voltage; generating an alternating voltage of configurable amplitude; coupling the alternating voltage to the direct voltage lines; obtaining measurements on the direct voltage lines including voltage measurements; couple or decouple the alternating voltage to the direct voltage lines based on the measurements on the direct voltage lines; and controlling the amplitude of the alternating voltage generated based on the measurements on the direct voltage lines.

Advantageously, the present invention allows the position control system to be power supplied with sufficient capacity to move the solar tracker at any time, regardless of the time of day or adverse weather conditions, eliminating the need for an energy storage system (e.g., a battery) for backup in the position control system itself, since the system would always be power supplied, either by the string voltage or by the injection of an alternating voltage. In addition, it does not require the installation of additional wiring dedicated to the power supply of the position control system.

**Brief description of the drawings**

Next, a series of drawings that help to better understand the invention and that are expressly related to an embodiment of said invention that is presented as a non-limiting example of it are described very briefly.

Figure 1 represents an electrical model equivalent to a string of solar panels.

Figure 2 illustrates a curve that relates the current to the voltage at different working points of the string when it acts as a generator.

Figure 3 shows a simplified electrical model corresponding to a string.

Figure 4 shows the power connection of a solar tracker position control system in parallel with a load and with the string output.

Figure 5 illustrates the energy production of the string during a sunny day.

Figure 6 illustrates the energy production of the string during an adverse weather situation in the middle of the day.

Figure 7 shows the power supply of a position control system from the string output (DC power supply) and/or from an alternate source (AC power supply).

Figures 8A and 8B show two situations caused by the alternating voltage provided at the output of the string: an undesired situation of power consumption of the string (Figure 8A) and a desirable situation of power generation around the MPP (Figure 8B).

Figure 9 represents a connection/disconnection system based on a switch to avoid the simultaneity of the direct voltage produced by the string with the alternating power provided by the external source.

Figures 10A and 10B show, for the Figure 9 schematic, the use of the switch when the string is in production (Figure 10A) and when the string is not delivering energy (Figure 10B).

Figure 11 illustrates an equivalent circuit for the connection of the position control system in situations in which the direct power supply coexists with the alternating power supply.

Figure 12 shows a circuit equivalent to that of Figure 11 to calculate the voltage between points A and B.

Figures 13A and 13B illustrate the application of the superposition principle to the circuit of Figure 12.

Figure 14 illustrates the circuit to determine the impedance seen from points A and B with all sources disconnected.

Figures 15A and 15B show the final circuit equivalent to that of Figure 12.

Figure 16 shows the power curves P of the string in different possible scenarios.

Figure 17 illustrates the DC operation of the string in the "DAY" zone of Figure 16.

Figure 18 illustrates the DC operation of the string in the "LIM" zone of Figure 16.

Figure 19 illustrates the DC+AC operation of the string in the "STA" zone of Figure 16.

Figure 20 illustrates another DC+AC operation of the string in the "STA" zone of Figure 16.

Figures 21A and 21B show, for DC+AC operation in the "STA" zone, two situations caused by the alternating voltage provided at the string output: a desirable situation of string power generation (Figure 21A) and an undesired situation power consumption of the string (Figure 21B).

Figure 22 illustrates the AC operation of the string in the "NOC" zone of Figure 16.

Figure 23 schematically represents a power supply system of a solar tracker position control system according to one embodiment.

Figure 24 shows a situation in which the power supplied by the string is sufficient to keep the position control system active, but it is not sufficient to carry out a motor activation manoeuvre.

Figures 25A-25F show different embodiments of the alternating voltage generation unit.

Figure 26 shows an embodiment of the position control system voltage conversion unit.

Figures 27A-27D illustrate different embodiments of the coupling unit.

Figures 28A-28B show different embodiments of the power system when it is applied simultaneously to several strings.

Figures 29A-29C illustrate different bidirectional switch implementations that can be used in the power system.

Figure 30 shows the flow chart of a method for the power supply of a solar tracker position control system according to one embodiment.

## Detailed description of the invention

The invention refers to a system and a method for power supply of a solar tracker position control system. The solar tracker (also called "tracker") includes a set of photovoltaic solar panels connected in series, which is known as a "string", and which produce a direct voltage under solar irradiation. The string's output cables are direct output lines from the solar panel set, a high-voltage wiring system that transports the energy produced by the string to an external load. The direct output voltage lines of the string are characterized by a nominal voltage $V_{string}$ and a nominal current $I_{string}$, which in conditions of maximum irradiation are close to the maximum power point (MPP, "Maximum Power Point").

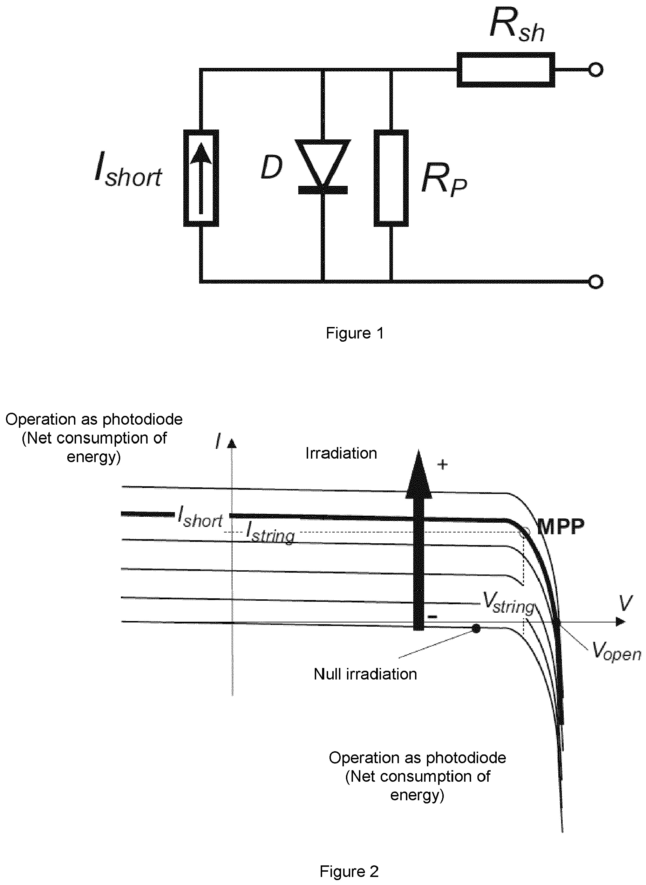

In **Figure 1,** an electrical model equivalent to a string is represented, which consists of a current source $I_{short}$, slightly larger than $I_{string}$, a diode D of elbow voltage close to $V_{string}$ and two resistors, one leakage resistor $R_p$ located in parallel with the diode D and a series resistor $R_{sh}$ which corresponds to the output impedance of the set. The current $I_{short}$ is the one that the string would provide in short circuit and the maximum voltage that the string can produce is obtained in open circuit, value $V_{open}$.

In **Figure 2,** a curve is shown that relates the current to the voltage at all the possible working points of the string when it acts as a generator. Although normally only the quadrant corresponding to generator operation is represented, the device string can work as a normal diode (below the usual zone) or as a photodiode (to the left of the usual zone); these two zones must be avoided since the string has a net power consumption there.

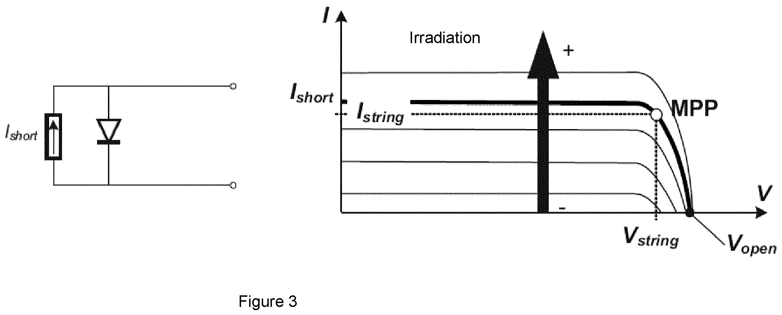

The model in Figure 1 is often simplified by assuming that the leakage resistance $R_p$ is very large, so much so that leakage is considered negligible, and assuming that the series resistance is very small (it is usually actually a few tens of milliohms). These simplifications are not important in the analysis of the operation of the string, except that it means considering that its electrical performance is 100%, when in reality it is usually close to 99%. This simplified model is presented in **Figure 3** along with the curve *V-I,* in which the effect of suppressing the two resistances is observed: the curve does not present any inclination in the flat zone, but is perfectly horizontal. In general terms, this simplification is considered acceptable for almost all analyses.

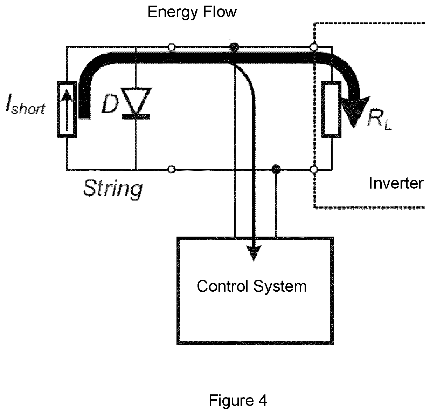

When the string is connected to a load $R_L$ (an inverter or other system to extract and adapt the energy produced), the source current $I_{short}$ flow overload $R_L$ and the power it generates is developed. The solar tracker position control system is power supplied in parallel with the load, from which it steals a small part of the energy to be able to function, as shown in **Figure 4.**

From tests carried out, it can be established that the string it has net energy production from a time before morning twilight to a time after evening twilight. These times depend on the latitude, the weather conditions and the movement strategy of the solar tracker. In the best of cases, this time can reach 50 or 60 minutes.

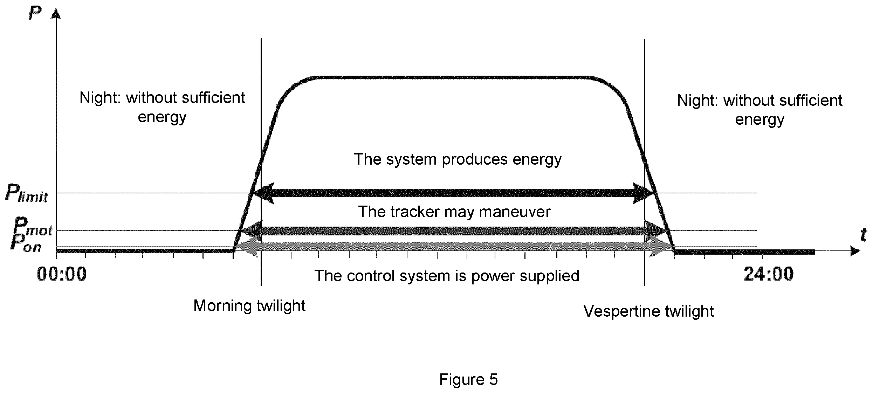

Thus, as presented in **Figure 5,** the energy production of the string presents an area of great production while there is direct exposure to the sun and, when the sun is low, the production begins to decrease until it disappears completely at night. Although there is production, it cannot always be used for generation and there is a power limit $P_{limit}$ below which the inverter (or equipment that manages the energy produced) cuts off the flow and leaves the panel disconnected. The power limit $P_{limit}$ depends on the equipment itself and the characteristics of the string.

The solar tracker position control system also needs a minimum amount of power to be able to stay active, ignition power $P_{on}$, and an amount of power to drive the motor that positions the solar tracker, motor activation power $P_{motor}$. The ignition power $P_{on}$ is very small and, although it depends on how communications are developed, it can be assumed to be less than 10 W in almost all cases. Motor activation power $P_{motor}$ fundamentally depends on the motor used and, considering the present situation, it can be estimated at about 300 W, if losses due to non-ideal performance of the electronic drive itself are included.

Under these conditions, it can be considered that the position control system would be power supplied during the entire time that there is daylight, including the moments before morning twilight and after evening twilight (almost two hours more than the time between twilight with favourable weather situation). However, if it is intended to execute movements on the solar tracker, that time would be reduced. In any of the cases, during the night period the position control system could not be power supplied.

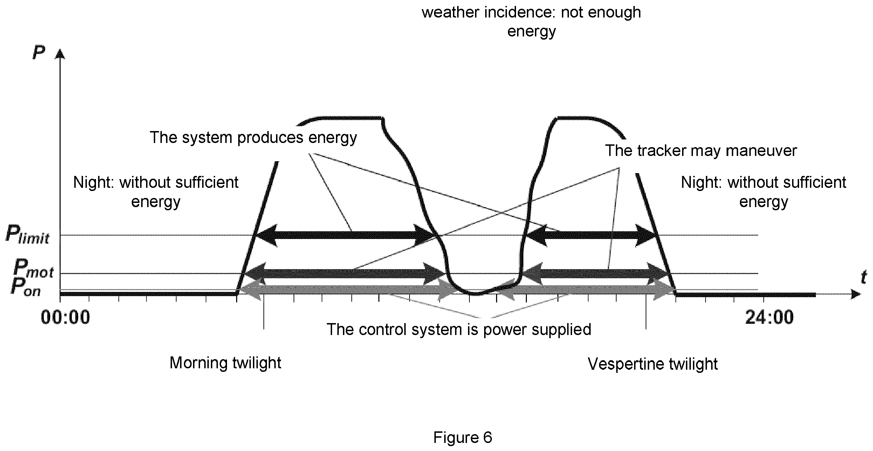

A similar situation occurs during the day in the case of adverse weather conditions (e.g., clouds), if the solar tracker is in the wrong orientation due to having passed to a defence position or if another circumstance has occurred such as the accumulation of snow or dust on the panels. Such situations occur in **Figure 6** and, depending on the case, they can cause not only the system to stop generating energy, but also the position control system may be left without drive capacity because the available production falls below the motor activation power $P_{motor}$ or even no power supply if it drops below the ignition power $P_{on}$.

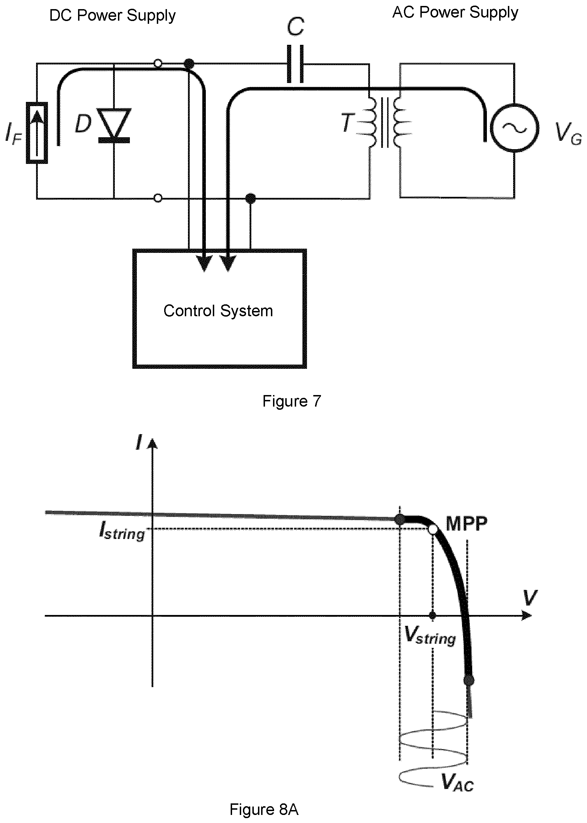

The present invention proposes a power supply system of the position control system that intends to eliminate any energy storage system for backup in the control system itself of position. To do this, the position control system is power supplied from a different source to provide the necessary power supply for the operation of the position control system and, eventually, the necessary for any manoeuvre on the solar tracker. The proposed idea is presented in **Figure 7** and consists in providing said power supply from an external source of alternating voltage $V_G$, coupled on the same direct current lines used to conduct the energy generated by the *string.*

The presence of the transformer *T* allows to introduce the necessary insulation and the condenser C in series prevents direct current from reaching the transformer and saturating it. Thus, the energy necessary for the power control system comes indistinctly from the string (current source $I_F$) or from the alternating voltage source $V_G$.

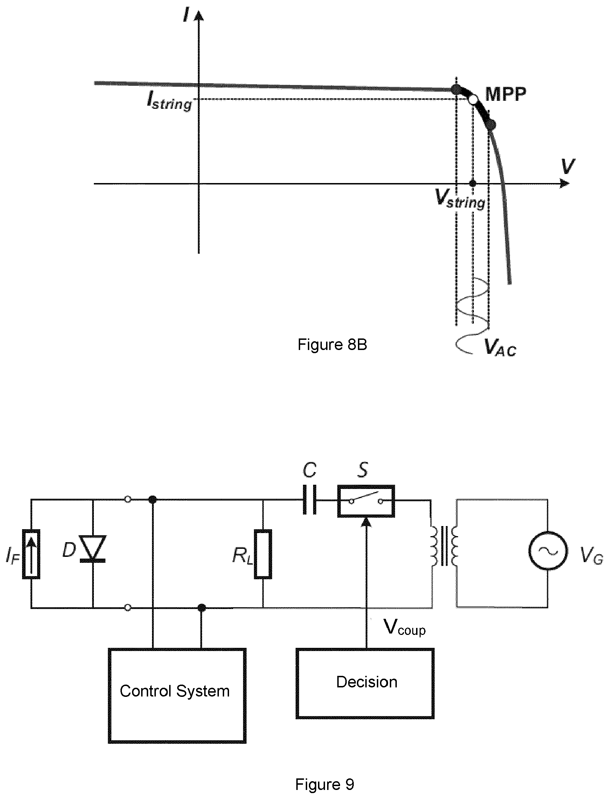

However, the idea thus raised may have some physical problems related to the operation of the string. In a first approximation, when the string is in full production, adding an alternating voltage would not only take it out of the maximum power point (MPP), but could also take it towards the first quadrant and consume net power (**Figure 8A**), a situation in which part of the energy provided by the alternating source would end up being dissipated on the string itself ($I_{string}$ negative). As can be seen in Figure 8A, the operating point varies on the characteristic curve of the string from a position located to the left of the M PP to another position located to its right and, already in the first quadrant, where the string consumes energy ($V_{string}$ positive, $I_{string}$ negative). In the best of cases, with a low value of the alternating voltage $V_{AC}$ applied to the direct voltage lines of the string, it would remove the string from the MPP (**Figure 8B**) and the operating point would vary between the two end positions to its left and to its right, but without reaching the first quadrant ($V_{string}$ positive, $I_{string}$ negative) as occurs in Figure 8A.

These behaviours are independent of the working frequency of the alternating power supply and, therefore, will occur both for a power supply at low network frequency (50 or 60 Hz depending on the case) and for a high frequency. In a preferred embodiment of the power supply system of the position control system, a high frequency is used, so that the applied voltage can be very low and the oscillation about the operating point would not entail substantial changes in the extraction of energy from the string.

Under these conditions, in the scheme proposed in Figure 7, it is recommended that the alternating power supply voltage does not coexist with the production situation of the panel, since it could affect the energy efficiency of the installation. A possible solution involves the use of separation filters (or "splitters") of direct and alternating voltage, but they require high-frequency power supply so as not to penalize the final cost due to the high volume and price of these filters.

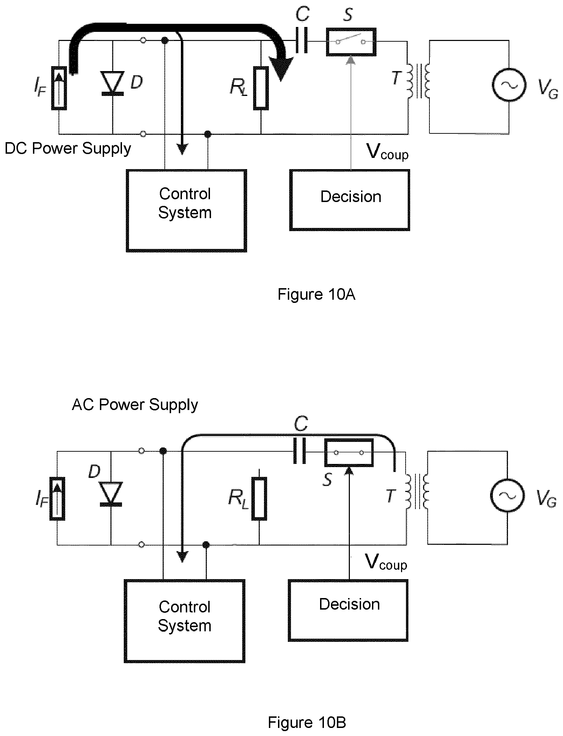

To be able to operate at any frequency, including that of the electrical network, a solution proposed by the present invention consists of including a connection/disconnection system that avoids the simultaneous production of the string with the alternating power supply (**Figure 9**). Before specifying how said connection/disconnection system is implemented, it is represented in the figure as a simple switch S controlled by a decision system that determines the connection or disconnection of the switch in such a way that when the string is in production (**Figure 10A**) the position control system will be power supplied by the voltage generated by the string itself (keeping switch S off), while when the energy it produces is not sufficient and the string is not delivering energy, the alternating system will be connected to power supply it (**Figure 10B**), by connecting the switch S.

This solution does not pose significant dynamic problems, since it is not necessary to achieve a rapid change between the two situations, since the need to manoeuvre does not require more than a response capacity of around seconds in the most extreme case. The system presented in Figure 9 and its basic operation (Figures 10A and 10B) present two important questions that must be answered and that, to a large extent, condition its way of working. The first of these is how the decision is made to go from the situation in Figure 10A (switch S off) to that in Figure 10B (switch S on). The second question is what happens when you are in alternating power conditions (Figure 10B) but the string can still provide some energy.

In order to solve this second question, what happens in the circuit when the direct and alternating power supplies are simultaneously analysed in detail below.

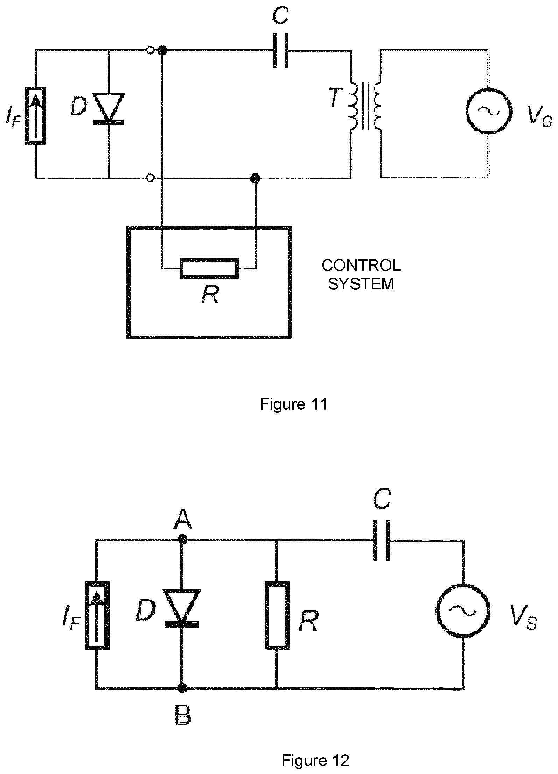

The cases of operation in which there is only DC power supply from the string (daytime power supply) and in which there is only AC power supply from the alternate source (night power supply), do not present any problem. The problem lies in the moments in which the string can still deliver power, albeit little, and the direct power supply must coexist with the alternating power supply. These moments occur at the beginning and end of the diurnal cycle or at times when weather conditions are adverse (Figures 5 and 6). In such circumstances the equivalent circuit is the one shown in Figure 11, where the resistance R represents the load that the power supply of the position control system supposes.

The analysis of the circuit requires two successive steps in which the superposition principle and Thevenin's theorem will be applied to determine the behaviour of the linear devices (all except the diode D of the string model shown in Figure 1) and, in this way, establish what happens with the nonlinear device (the diode D which represents the electronic behaviour of the string). To do this, the circuit is redrawn and the source $V_G$ is replaced and the transformer $T$ by an alternating voltage source $V_s$ (**Figure 12**) in order to calculate the voltage between points A and B.

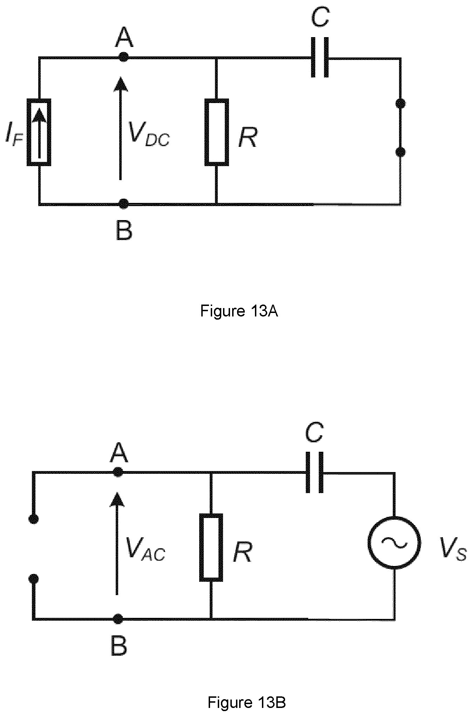

To apply Thevenin it is necessary to obtain the no-load voltage (without the diode D) between points A and B and then determine the impedance seen from those points. For the first one, the superposition principle is applied, which determines the voltage due to each of the sources separately (**Figures 13A and 13B**).

The no-load voltage between A and B due to current source $I_F$ it is $V_{DC} = R \cdot I_F$ (by condenser C does not circulate direct current, Figure 13A), while that due to the alternating source is $V_{AC}$ (Figure 13B), where $\omega = 2\pi \cdot f$ is the source frequency $V_s$:

$$V_{AC} = \frac{R}{R + \dfrac{1}{j\omega C}} \cdot V_S = \frac{j\omega RC}{1 + j\omega RC} \cdot V_S$$

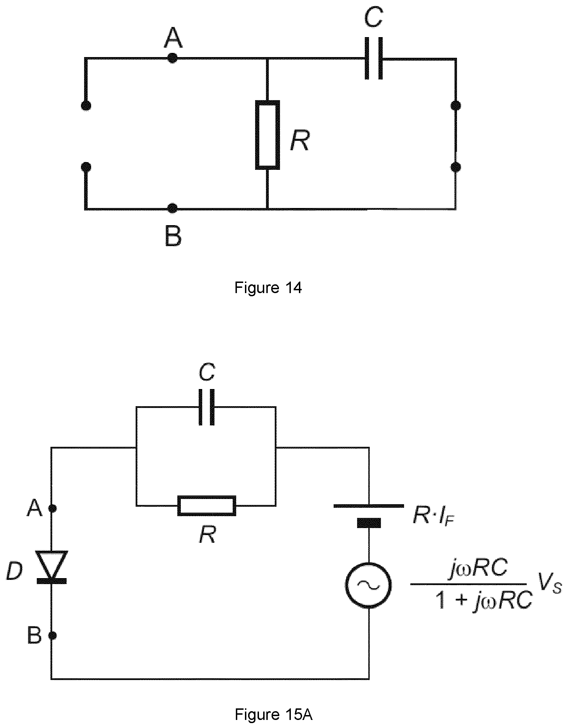

With a sufficiently large value of C, $V_{AC} \approx V_S$. To complete the Thevenin equivalent, it is necessary to determine the impedance seen from A and B with all sources disconnected (the current source $I_F$ in open circuit and the voltage source $V_S$ shorted, **Figure 14**).

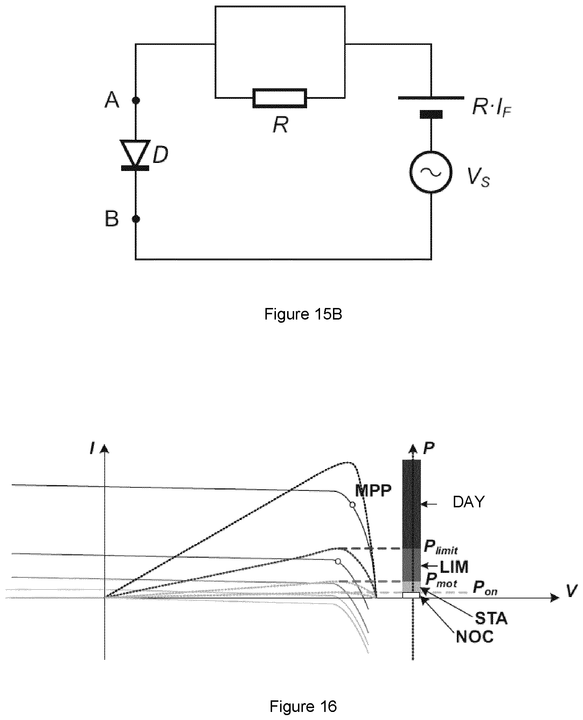

Under these circumstances, the resistance R and the condenser C remain in parallel, so that the final equivalent of the entire system applied to the diode D corresponds to what is represented in **Figure 15A.** Again, if the condenser C is large enough, its impedance can be considered very low relative to the resistance R, so that the parallel of both will be practically a short circuit, so that under normal design conditions the final circuit is the one illustrated in **Figure 15B,** with a direct voltage and an alternating voltage applied directly to the diode D that constitutes the *string.*

The equivalent as resistance R of the consumption of the position control system is only a first approximation. Actually, the position control system presents two different situations, when it is only power supplied, but does not perform any manoeuvres, and when it must perform manoeuvres. In the first case, the consumption is only the static one, the one needed to keep the circuits running and for eventual communications, ignition power $P_{on}$; in the second case, the consumption is much higher and corresponds to the sum of the ignition power $P_{on}$ plus the power needed for the manoeuvre, motor activation power $P_{motor}$.

If the power curve of the string reaches a sufficient value, the position control system can be power supplied, while otherwise the position control system cannot be power supplied. In **Figure 16,** the possible scenarios are summarized with the power curves P (result of multiplying the voltage v because of the intensity *I*) dotted and the situations in which the inverter is working (above $P_{limit}$, situation "DAY"); the moments in which the inverter does not work and there is manoeuvring capacity in the position control system (between $P_{motor}$ and $P_{limit}$, "LIM" situation); when it only has the capacity to power supply the basic blocks of the position control system, but without the option of manoeuvring (between $P_{on}$ and $P_{motor}$, status "STA"); and when it does not have the capacity to power supply the position control system (below $P_{on}$, "NOC" situation).

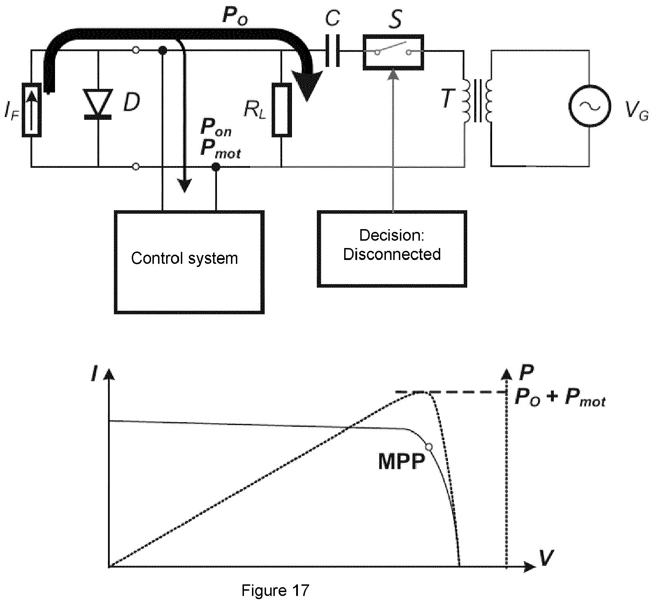

Regarding the operation in the "DAY" zone of Figure 16, it is a DC operation in which the string is providing energy to the inverter, which forces the assembly to work around the maximum power point MPP. For its part, the position control system is power supplied directly from the string voltage, which will normally be between 1000 and 1500 V. The AC system must remain disconnected. This zone is characterized because the string voltage is high and there is current towards the inverter (represented by the load $R_L$), with a power consumption $P_o$ by the inverter and a power consumption $P_{on}+P_{mot}$ by the position control system (**Figure 17**).

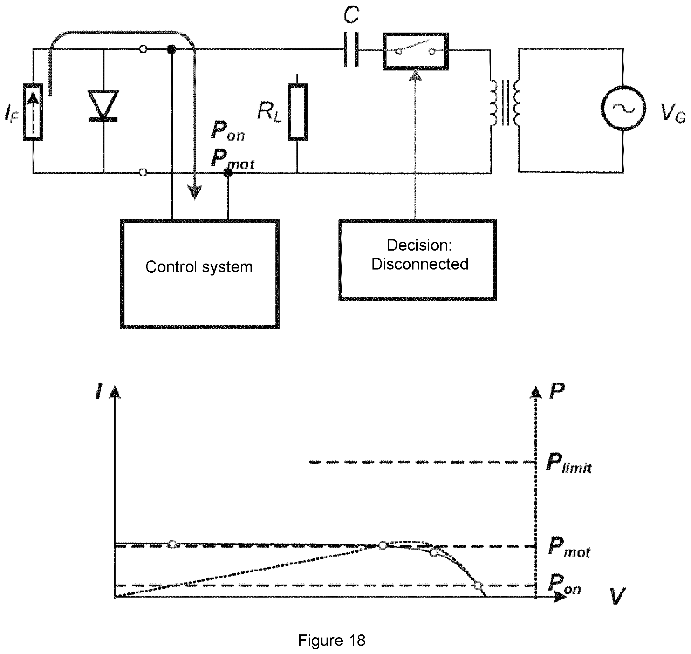

Regarding the operation in the "LIM" zone of Figure 16, it is also a DC operation in which the power generated by the string is not enough to make the inverter work, so that the inverter (load $R_L$) is disconnected and no energy is drawn from the string. However, the available power is enough to make the position control system work with its full operational capacity (basic operation and motor manoeuvring). Thus, the position control system is power supplied directly with lower voltages than in the "DAY" zone from the string. In this situation, the alternating power supply system must also remain disconnected. The "LIM" zone is characterized in that the current is null towards the inverter (load $R_L$). The position control system remains directly power supplied and its consumption depends on whether a manoeuvre needs to be performed or not (**Figure 18**). This consumption forces two possible operating points: it can be placed in a low voltage and relatively high current position or in a high voltage and low current position, depending on the power topology of the control system, although for most cases the voltage will be low and the current high, as corresponds to the case of a high ohmic equivalent resistive load. Figure 18 shows the power equivalent to the consumption of the position control system, both when it is low because it should only be running ($P_{on}$) or when it is a little higher because the engine is running for a manoeuvre ($P_{motor}$).

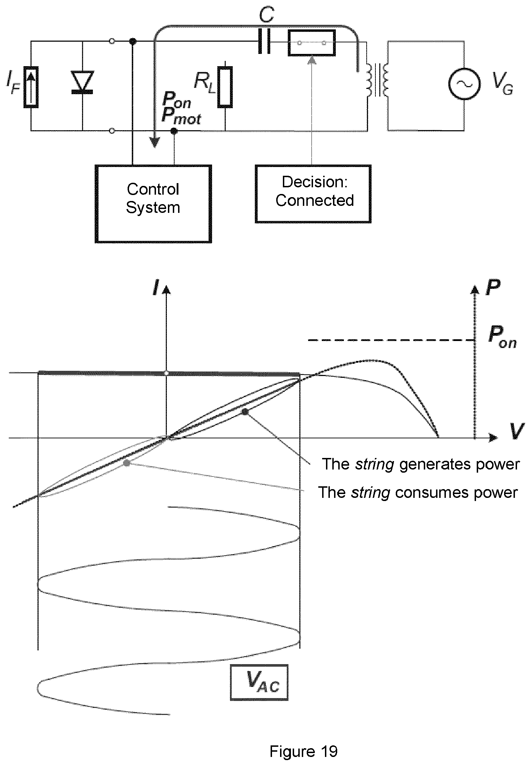

With respect to the operation in the "STA" zone of Figure 16, in this case it is DC+AC operation. This situation occurs when the power provided by the string is not sufficient for the operation required by the position control system, either because it needs to perform a manoeuvre or because the power produced by the string is not even sufficient to keep it active. In either case, the power demanded cannot be delivered by the string and the voltage will drop to very low values. In this case, the AC power supply system will be connected to provide the power demanded by the position control system, so that the voltage that coexists in the direct voltage lines of the string is the sum of a small direct voltage and a significant alternating voltage; this will cause the operating point to move along the characteristic curve of the string depending on the instantaneous voltage applied. In **Figure 19,** the case in which the power generated by the string is not enough to keep the position control system active has been drawn; the case where the generated power is above $P_{on}$, but it is insufficient for the manoeuvre (it is less than $P_{motor}$) does not differ from this except in quantitative aspects.

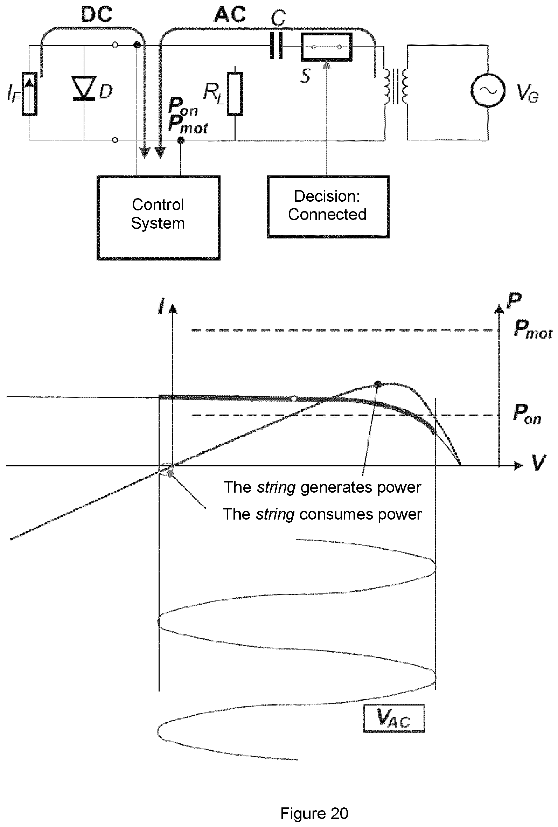

As can be seen, when the displacement occurs to the right of the vertical axis, the string delivers power, while when the displacement occurs to the left, the string consumes power. Except for a slight inclination in the characteristic curve due to the series resistance of the string ($R_{sh}$), the power balance in the string is almost zero, so that all the power required by the control system comes from the alternating power supply. It could be the case that the string was delivering the power $P_{on}$ to have the position control system active and power is demanded without the string being able to provide it at that time. Then, if the motor is activated, the demand is excessive and the voltage in the string drops practically to zero, returning to a case similar to the previous one represented in Figure 19, where the AC supply provides all the power. However, if the AC system is connected before activating the motor, the displacement will not occur from zero voltage, but from another point on the characteristic curve with a net contribution of power from the string (**Figure 20**).

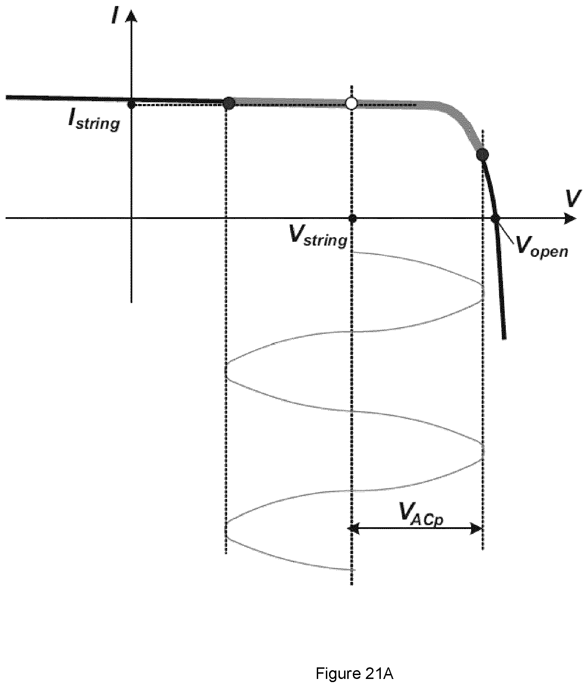

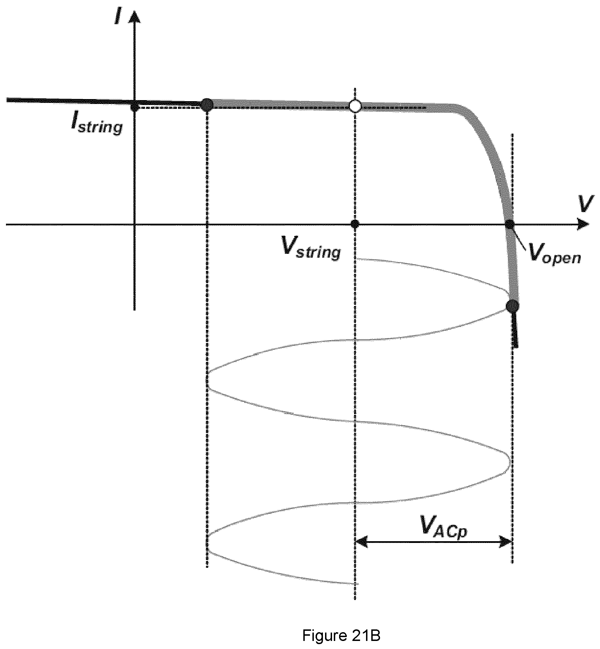

In both cases represented in Figures 19 and 20, the applied alternating voltage cannot be any, since if it is too small it will be difficult for it to supply the necessary power and, if it is too large, it could exceed the lower part of the characteristic curve, triggering a significant power consumption in the string. Thus, the total of the applied voltage (AC + DC eventually) must not exceed at any time the value $V_{open}$, that is, the maximum voltage that the string can produce in an open circuit. With an operation situation of the string that places its working point in $(V_{string}, I_{string})$, on **Figure 21A** the applied alternating voltage has a peak value $V_{ACp}$ what makes $V_{string} + V_{ACp} < V_{open}$, with which it is not lowered to the area of currents $I_{string}$ negative and there is no risk of energy dissipation. In the case of **Figure 21B** the limit has been exceeded, so $V_{string} + V_{Acp} > V_{open}$, so that in this case there is a strong loss of energy in the string, a situation that should be avoided. In short, any alternating voltage should preferably not be applied, but its value should be taken care of to avoid a problem in the operation of the set.

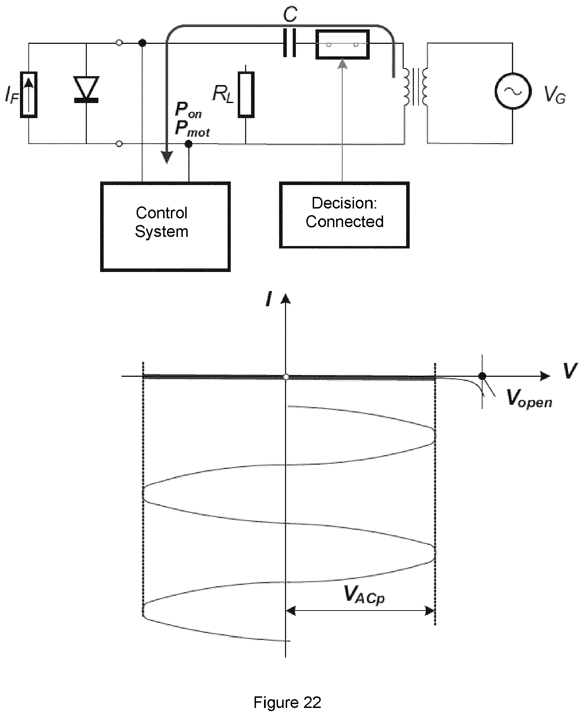

With respect to the operation in the "NOC" zone of Figure 16, in this case it is an operation only in AC. When the energy production of the string is null, which occurs at night or if the solar panels are covered (by snow, for example), all the energy has to come from the alternating power supply system. This situation is characterized by the fact that the string will produce null voltage and its characteristic curve is always below the abscissa axis. In such circumstances, the applied alternating voltage moves the working point on the curve, but it is so close to the axis that the power dissipated on the string is so low that it can be neglected. Now, the limit of the applied alternating voltage is defined by $V_{open}$ and it is not necessary to raise any further considerations about the operation **(Figure 22)**.

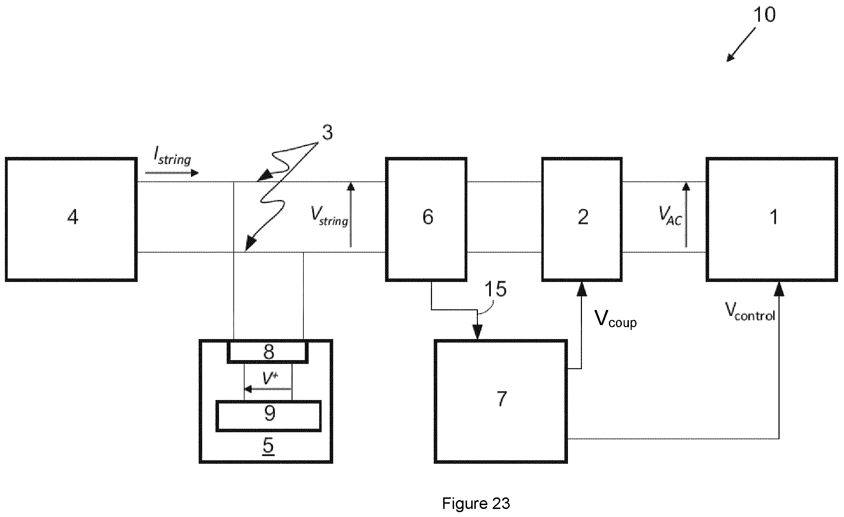

In **Figure 23,** a power supply system 10 of a solar tracker position control system is shown according to one embodiment, where the solar tracker includes a string or set of solar panels 4 connected in series.

The power supply system 10 comprises a position control system 5 comprising a power supply input 8 connected in parallel with output direct voltage lines 3 from the set of solar panels 4 and a voltage conversion unit 9 configured to obtain, from a voltage $V_{string}$ received through the power supply input 8, a direct supply voltage $V^+$ with the same polarity regardless of the type of power supply (direct, alternating or mixed -direct + alternating-) received through the power supply input 8.

The power supply system 10 further comprises an alternating voltage generation unit 1 configured to generate an alternating voltage $V_{AC}$ of configurable amplitude; a coupling unit 2 via which the alternating voltage is coupled $V_{AC}$ to the direct voltage lines 3 (and, therefore, to the position control system 5 as it is connected in parallel with the direct voltage lines 3); a measurement unit 6 configured to obtain measurements 15 on the direct voltage lines 3, where said measurements 15 include at least some voltage measurements $V_{string}$ in the direct voltage lines 3; and a power supply control unit 7 configured to couple or decouple the alternating voltage $V_{AC}$ to the direct voltage lines 3 and control the amplitude of the alternating voltage $V_{AC}$ generated based on the measurements 15 obtained by the measurement unit 6.

With regard to the criterion for connecting or disconnecting the AC power supply, when there is current flowing to the inverter it means that the energy production is sufficient and, therefore, the string voltage $V_{string}$ is high and the alternating power supply system must remain disconnected, so the power supply control unit 7 decouples the alternating voltage $V_{AC}$ to the direct voltage lines 3. The coupling or decoupling of alternating voltage $V_{AC}$ is preferably carried out by acting on the coupling unit 2, although in some cases it can be carried out by acting directly on the alternating voltage generation unit 1 itself.

When the voltage in the string $V_{string}$ is high, whether or not the inverter is connected, it means that there is the possibility of supplying the position control system 5, since at the moment in which the load that the position control system 5 supposes is excessive, the operating point will tend to occur at very low or null voltage.

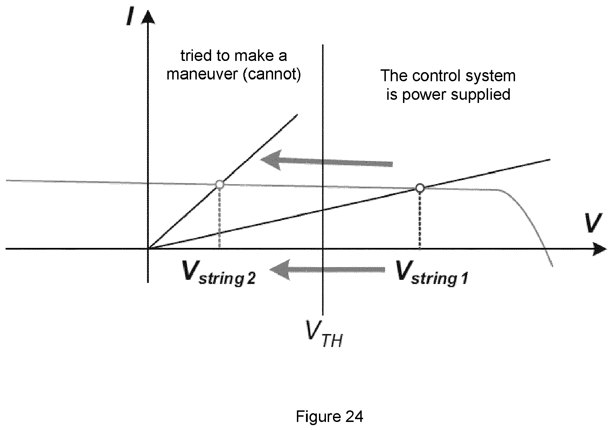

In **Figure 24,** a situation is shown in which the power supplied by the string is sufficient to keep the position control system 5 active, but not enough to carry out a motor activation manoeuvre. In such a case, the energy demand increases (equivalent to the string being loaded with a lower resistance) and the working point is reduced to lower voltages. In the case represented in Figure 24, the string voltage is at an initial voltage $v_{string1}$ in which the position control system 5 is power supplied and remains active, supplying it with ignition power $P_{on}$. When the position control system 5 tries to perform a motor activation manoeuvre, for which it requires a motor activation power $P_{motor}$ much higher than the ignition power $P_{on}$, the string voltage passes to a final voltage $v_{string2}$, less than the initial voltage $v_{string1}$, for which it cannot supply the required power $P_{motor}$.

In one embodiment, the power control unit 7 is configured to couple or decouple the alternating voltage $v_{AC}$ to direct voltage lines 3 based on a comparison of voltage measurements $V_{string}$ on direct voltage lines 3 with a threshold voltage $V_{TH}$. For example, if a threshold voltage $V_{TH}$ the decision system (i.e., the power supply control unit 7) can recognize a situation of insufficient energy to power the position control system 5 when the string voltage $V_{string}$ decreases below said threshold voltage $V_{TH}$, in this case connecting the alternating voltage generation unit 1 to the direct voltage lines 3 at the output of the string. 2.

Therefore, in one embodiment, the alternating voltage generation unit 1 is connected when the string voltage $V_{string}$ is low, less than a threshold voltage $V_{TH}$ ($V_{string} < V_{TH}$), where the value of the threshold voltage $v_{TH}$ cut-off is a configurable value defined according to the characteristics of the string and, optionally, also according to the energy needs of the position control system 5 (e.g., according to the value of the activation power of the motor $P_{motor}$). However, the connection/disconnection (or coupling/decoupling) decision does not have to be implemented with a voltage sensor that measures the string voltage $V_{string}$ and an on/off comparator that compares the string voltage $V_{string}$ with the threshold voltage $V_{TH}$, since it could give rise to successive connections and disconnections of the alternating power supply system, but it can be done by means of a system capable of recognizing the situation of insufficient energy for the power supply of the position control system 5, such as for example through a state machine that allows moving from working in one area to working in another.

In one embodiment, the power control unit 7 is configured to control the amplitude of the alternating voltage $V_{AC}$ so that the total voltage in the direct voltage lines 3 does not exceed a maximum voltage $V_{open}$ that produces the set of solar panels 4 in open circuit. The higher the alternating voltage $V_{AC}$ applied, the better the power blocks of the position control system 5 will work, since their input voltages will be similar to those when they are power supplied directly from the string.

However, excessive supply voltage can push its operating point beyond the maximum voltage $V_{open}$ of the string in an open circuit, with which the string would become a power consumer. To prevent this situation, it is advisable to permanently measure the string voltage $V_{string}$ in order to act on the alternating power supply if at any time the maximum voltage is exceeded (or comes close) $V_{open}$. The power supply control unit 7 could, for example, modulate the value of the alternating voltage $V_{AC}$ applied, so that the system does not cut off the power supply in case of danger, but simply automatically adapts its value depending on the circumstances.

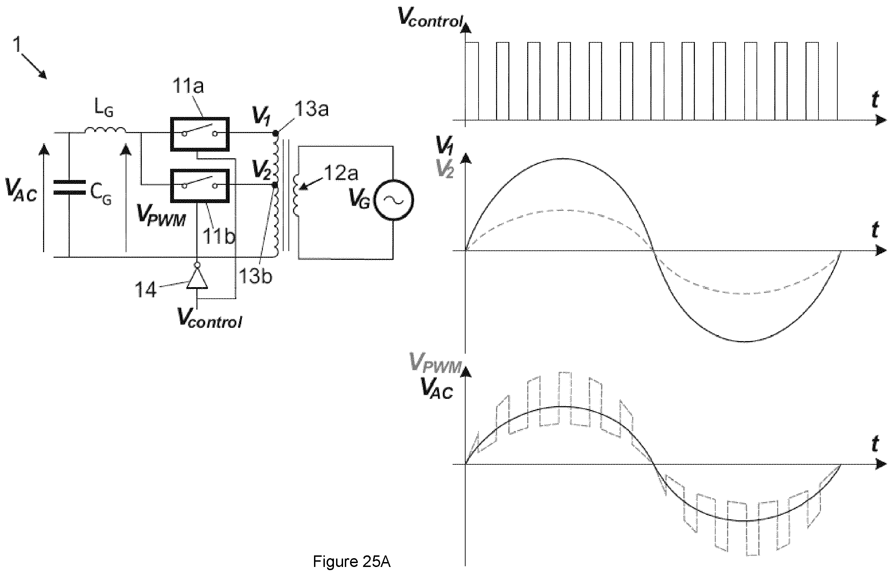

**Figures 25A-25F** show different possible embodiments of the alternating voltage generation unit 1, which comprises an alternating voltage source $V_G$, a transformer 12a or autotransformer 12b with one or more taps (13a, 13b), and a bidirectional switch (11a, 11b) connected to each tap (13a, 13b) and controlled by the power supply control unit 7. In addition, the alternating voltage generation unit 1 preferably comprises a low pass filter that includes a coil $L_G$ and a condenser $C_G$.

In the embodiment shown in Figure 25A, the alternating voltage generation unit 1 is made by means of a transformer 12a with two sockets (13a, 13b) between which it is switched at high frequency by means of two controlled bidirectional switches (11a, 11b) to achieve intermediate average voltage, which will be obtained by a low pass filter formed by a coil $L_G$ and a condenser $C_G$, and that will be a function of how long one of the sockets is connected and how long the other is connected in each period. In the example shown, the alternating voltage generation unit 1 has the capacity to supply different values of alternating voltage, through the two controlled bidirectional switches (11a, 11b) that allow one of the two sockets (13a, 13b) to be connected or disconnected of transformer 12a by means of a control signal $V_{control}$ PWM, coming from the power supply control unit 7, which acts on the switches (11a, 11b) alternately through an inverter circuit 14 applied to the control signal $V_{control}$ before acting on one of the switches. If the voltages of each socket (13a, 13b) are $v_1$ and $v_2$ and switched to frequency F between them, in such a way that in each cycle the first socket 13a is connected for a time $d \cdot T$ and the second socket 13b is connected for a while $(1 - d) \cdot T$ with d < 1 (duty cycle) and the period $T = 1/F$, the output alternating voltage $V_{AC}$ would be the average of both situations, that is:

$$V_{AC} = d \cdot V_1 + (1 - d) \cdot V_2$$

The same result can be obtained without taking $v_2$, switching only on the total voltage $v_1$, in which case, the output voltage would be:

$$V_{AC} = d \cdot V_1$$

This solution would have advantages, since it saves a controlled switch (switch 11b) and allows a greater margin of variation of the alternating voltage $V_{AC}$, although it would also have drawbacks by generating greater residual ripple and/or requiring a filter with higher condenser and coil values.

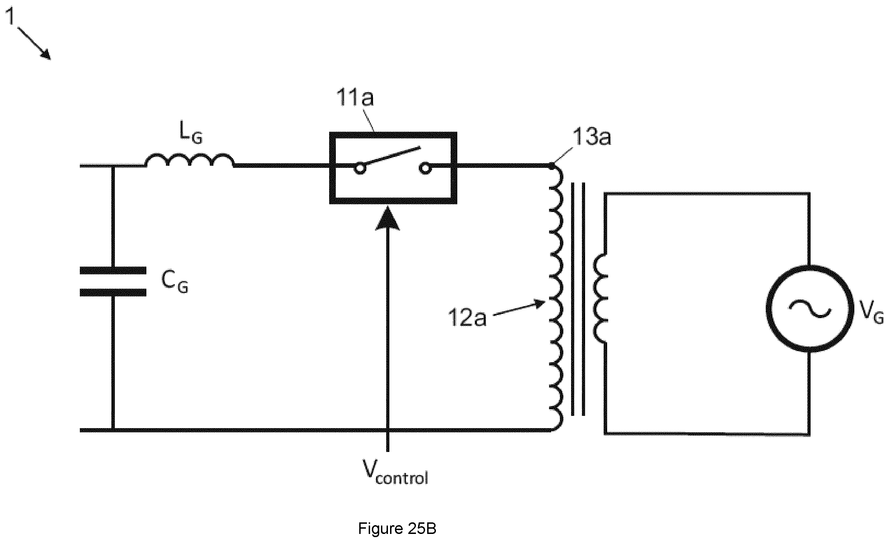

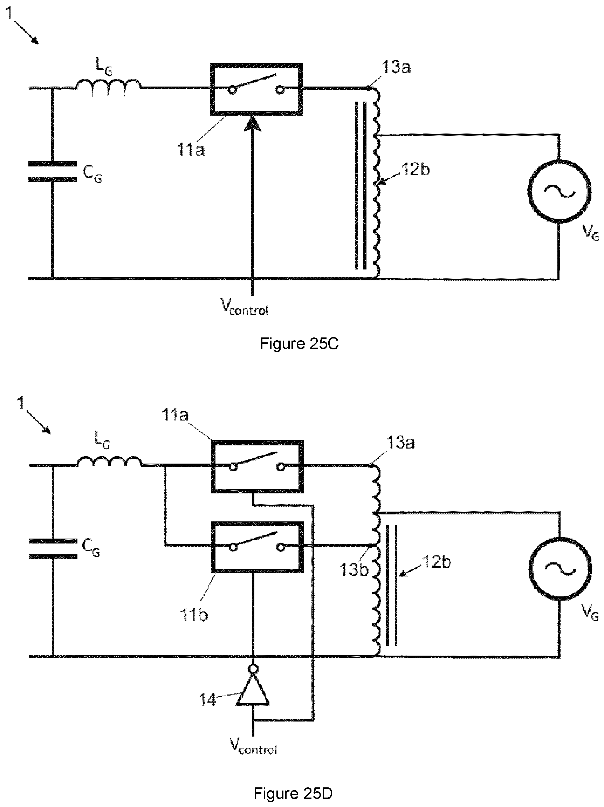

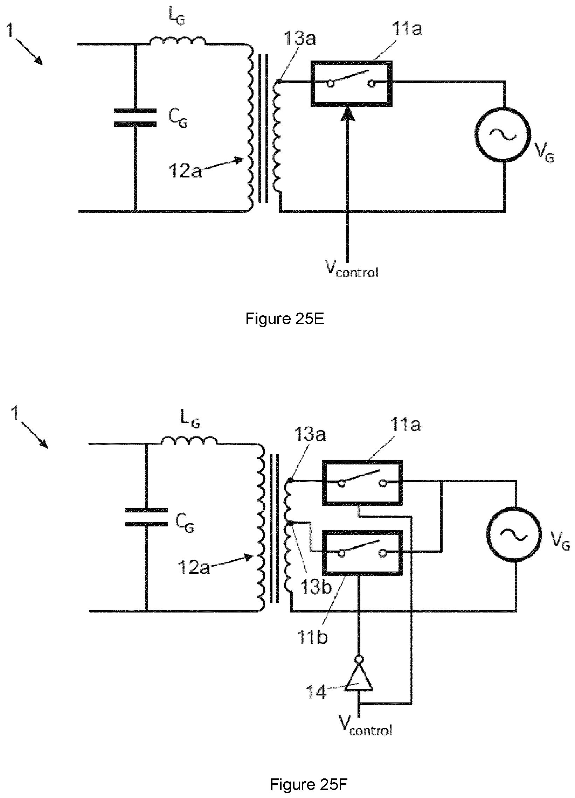

Other possible embodiments include the use of a transformer 12a with a single socket 13a (Figure 25B), the use of an autotransformer 12b with one socket (Figure 25C) or two sockets (Figure 25D) and including switching on the primary instead of the secondary of transformer 12a, either with one socket (Figure 25E) or with two sockets (Figure 25F). These other embodiments may present specific advantages in certain situations.

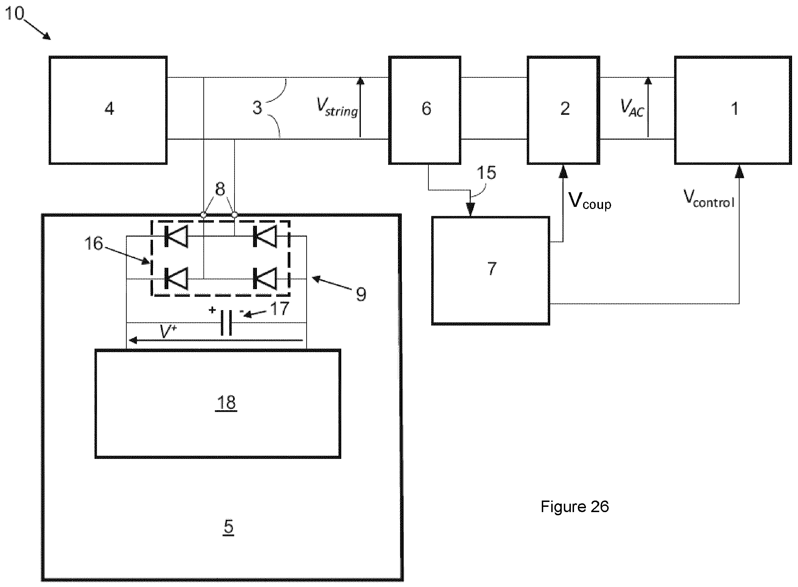

In order for the power supply system 10 to be operational and to be able to effectively power supply the position control system 5 of the solar panels, it must admit power supply from the direct voltage of the string, from the alternating voltage or from both simultaneously. For this, the position control system 5 includes a system that allows direct voltage to be obtained with the same polarity in all situations. The power input 8 of the position control system 5 is connected in parallel with the output direct voltage lines 3 from the set of solar panels 4, and the voltage conversion unit 9 receives the voltage $V_{string}$ (whether direct, alternating or mixed) from power input 8 and obtains from it a direct power supply voltage $V^+$, preferably always with the same polarity. In one embodiment, shown in **Figure 26,** the voltage conversion unit 9 of the position control system 5 is implemented by means of a diode bridge 16 (preferably a four-diode bridge) and a capacitive filter or filter condenser 17 to eliminate the ripple of the alternating power supply. On this filtering condenser 17 it is always obtained a positive direct voltage $V^+$, regardless of whether the power supply is direct, alternating or mixed (direct + alternating), so that the power supply unit 18 of the position control system 5 is identical to the one it would have if it were exclusively direct power supply, as it always received a direct power supply voltage $V^+$. In addition, this arrangement allows the position control system 5 to work without problems with polarity inversion, that is, connected upside down on the string voltage $V_{string}$.

The coupling of the alternating voltage $V_{AC}$ to the output direct current lines 3 of the set of solar panels 4 is carried out by means of the coupling unit 2. In Figures 9 and 10 the coupling unit 2 is represented as a generic switch S controlled by a decision system (i.e., the power supply control unit 7 in Figure 23), although it could be done by an electromechanical device or by a solid-state device such as a TRIAC; In both cases the control signal $V_{coup}$ that governs them would be the consequence of the decision made by the power supply control unit 7. The coupling is completed with a condenser C in series that prevents the arrival of direct to the alternating power system.

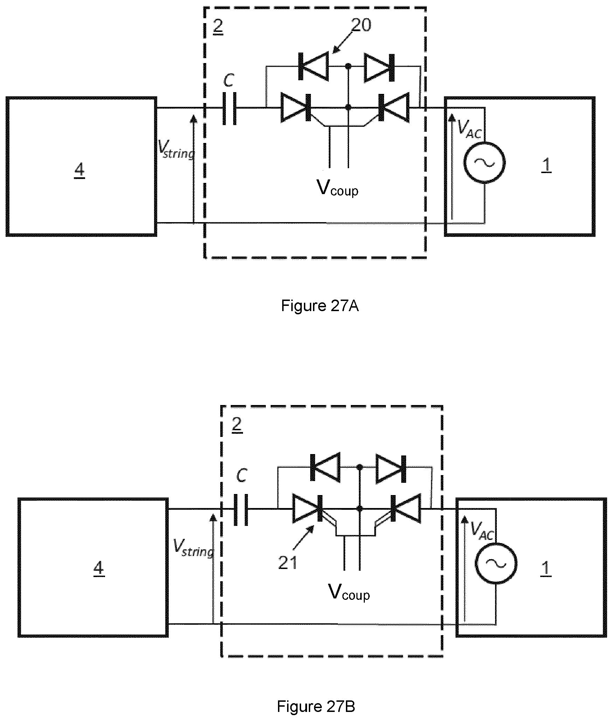

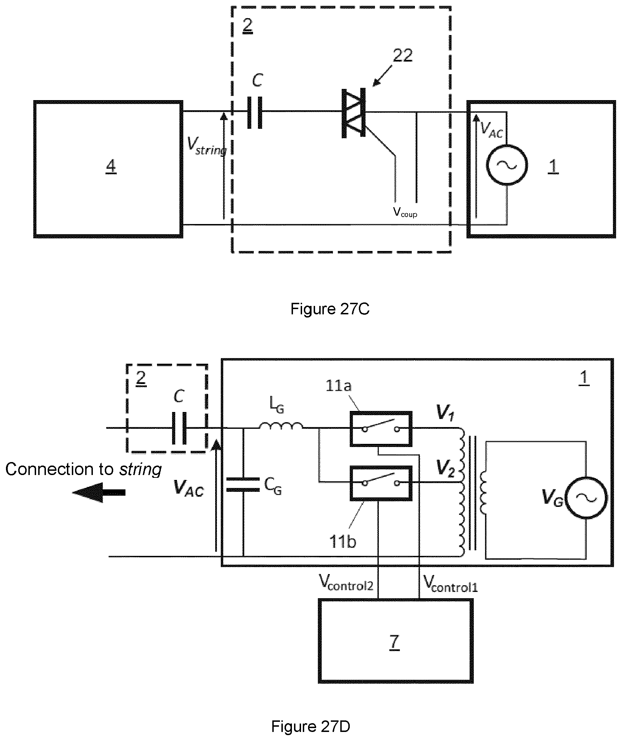

According to the embodiments shown in **Figures 27A-27C,** coupling unit 2 can be implemented by one or more bidirectional switches pulse fired (using for example SCR 20 -Figure 27A-, GTO 21 -Figure 27B- or TRIAC 22 -Figure 27C-), in series with a condenser C which has the purpose of eliminating the circulation of direct current through the alternating voltage generation unit 1, by means of one or several bidirectional switches governed by voltage or current level, or by means of electromechanical devices similar to relays.

However, it would be possible to dispense with the use of switches in the coupling unit 2, since the alternating voltage generation unit 1 includes one or two switches (11a, 11b) governed to obtain the voltage $V_{AC}$ (Figures 25A-25F), so that one more situation can be added to the control signals ($V_{control1}$, $V_{control2}$) of these switches (11a, 11b) in which they are disconnected, so that the output alternating voltage $V_{AC}$ of alternating voltage generation unit 1 would be null. In the **Figure 27D** an embodiment is illustrated in which the coupling unit 2 only comprises a condenser C.

Therefore, coupling unit 2 can be implemented by only one condenser C (Figure 27D), or by at least one bidirectional switch connected in series with condenser C and controlled by power control unit 7 (Figures 27A-27C).

In the event that the coupling unit 2 is implemented by only one condenser C, the main functions of the power control unit 7 include:

-   Connect or not connect the alternating voltage $V_{AC}$ to the direct voltage lines 3 of the string depending on the situation analysed.

-   In case the decision is to connect the alternating voltage $V_{AC}$, control the switch (or switches) of the alternating voltage generation unit 1 by means of a control signal $V_{control}$ PWM with duty cycle d appropriate to achieve the desired output voltage amplitude $V_{ACp}$.

If the alternating voltage production system must power supply several strings (for example, n strings), two different strategies can be considered:

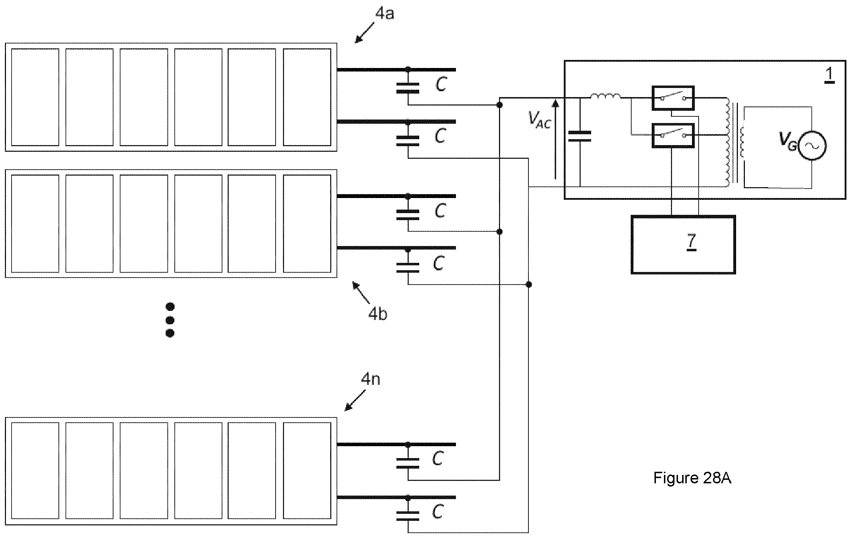

a) All the strings (4a,4b,... ,4n) that it would power supply in alternating will be in the same situations of solar irradiation, in which case, their production levels will be similar and, therefore, the coupling or decoupling decision would be similar to all of them. In this case, the coupling is made by one or more condensers ($C_1$, $C_2$, ..., $C_n$) for each string and when the alternating voltage generation unit 1 is connected it will power supply to all the strings (**Figure 28A**).

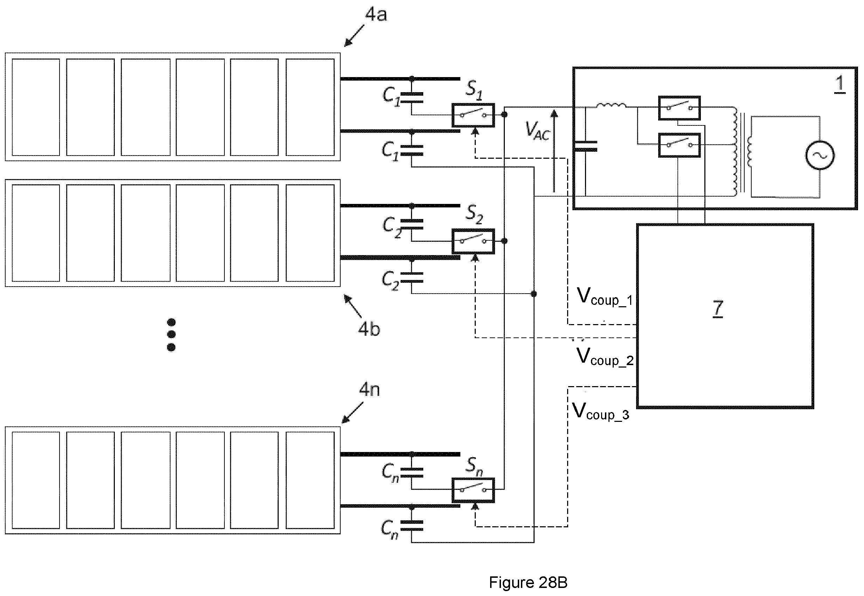

b) The strings (4a,4b,... ,4n) may be in different conditions for whatever reason, so the decision to connect/disconnect the alternating system must be individual. In this case, it is essential to place a specific switch ($S_1$, $S_2$, ..., $S_n$) to connect each one (**Figure 28B**). This solution has another additional advantage, since when required to carry out a manoeuvre it can be done individually, so that it is not necessary to handle the power corresponding to all the motors operating at the same time at the same time, but rather it is possible to choose to have a smaller system (less powerful) that activates the motors one by one. if they have n strings and the power for the manoeuvre is $P_{motor}$, the power that the AC system should require to move them all at once would be $n \cdot P_{motor}$ and that is the power of design, while if the same is done in $n$ times the design power would be just $P_{motor}$, with which the power supply system 10 would have lower power requirements.

Logically, there are different possible mixed alternatives, such as carrying out a certain number of simultaneous manoeuvres. The final configuration will have implications on the topology of the assembly and on the design power of the alternating power system. To better understand what the solutions in Figures 28A and 28B imply, a numerical example can be considered. Assuming a set made up of 100 strings in which the power required for the manoeuvre is 300 W ($P_{motor}$ = 300 W), including efficiency and safety margins, the time that the manoeuvre lasts is 10 s and the power to operate the position control system 5 is 10 W ($P_{on}$ = 10 W), and assuming a work in the "NOC" zone of Figure 16 (there is no energy produced by the string):

a) If a solution like the one in Figure 28A is chosen (all the strings connected to the alternating voltage $V_{AC}$ simultaneously and all the manoeuvres are operated at the same time), the design power of the power supply system 10 should be 300·100 = 30 kW. The time that the manoeuvre operation would last would be the same as that of performing a single operation, that is, 10 s. If, with this same structure, it was decided to carry out the manoeuvres sequentially, the power required at each moment would be 300 W for the manoeuvre and an additional 99·10 = 990 W because all the position control systems would be operational. The total design power should be 1290 W and the manoeuvres would last for 10·100 = 1000 s.

b) If a solution like the one in Figure 28B were chosen (the strings can be connected individually to the alternating voltage generation unit 1) and to operate the manoeuvre one by one, the necessary power would be 300 W (the corresponding to only one of the position control systems) and the process would last for 10·100 = 1000 s.

c) If it is chosen to operate several manoeuvres m simultaneously on a topology like the one in Figure 28B, the total power would be 300·$m$ and the total time required would be 10·100/m. With 5 simultaneous manoeuvres, the design power would be 1500 W and the time taken to complete all of them would be 200 s, just over 3 minutes.

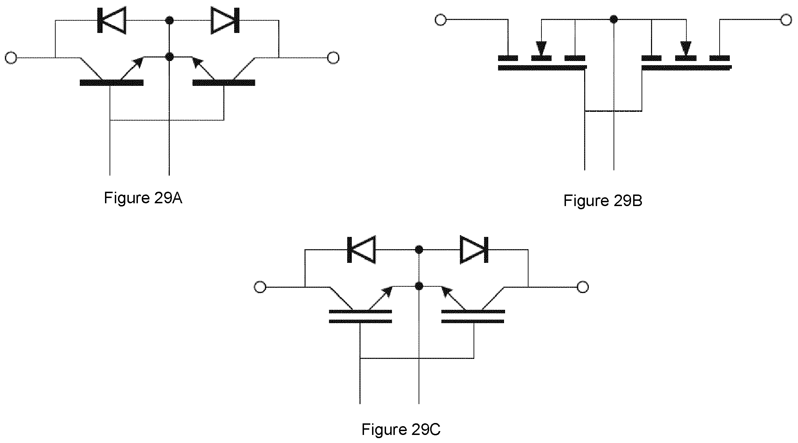

All the bidirectional switches used in the different embodiments, either in the alternating voltage generation unit 1 and/or in the coupling unit 2, can be implemented by means of any type of switch controlled by voltage level or by current capable of working in high-frequency switching, such as bipolar transistors (**Figure 29A**), MOS transistors (**Figure 29B**) or IGBTs (**Figure 29C**), including free-wheeling diodes if necessary, presenting in each case advantages and disadvantages regarding the ease of government, switching losses and the ability to work at a higher frequency.

With regard to the measurement unit 6 shown in Figure 23, it is configured to obtain measurements 15 on the direct voltage lines 3. In one embodiment, the measurement unit 6 is implemented by means of a voltage sensor connected to the direct voltage lines 3 of the string and which provides voltage measurements $V_{string}$ to the power control unit 7. In another embodiment, the measurement unit 6 may be configured to obtain voltage measurements $V_{string}$ and intensity $I_{string}$ on direct voltage lines 3. For this, the measurement unit 6 can include a double voltage and current sensor with two outputs, including voltage measurements $V_{string}$ and measurements of current $I_{string}$ of the direct voltage lines 3 of the string. The current measurements $I_{string}$ in combination with voltage measurements $V_{string}$ can be used to obtain the instantaneous power supplied (or consumed) by the string.

The measurement unit 6 could be located as shown in Figure 23, after the position control system 5 (on the right in the figure), or before said system (on the left in the figure), so that can directly read the string output current $I_{string}$. The power control unit 7 can make any of the decisions to couple/decouple the alternating voltage $V_{AC}$ to the direct current lines 3 and to control the amplitude $V_{ACp}$ of alternating voltage $V_{AC}$ generated based on measurements 15 obtained by measurement unit 6, where measurements 15 may include voltage measurements $V_{string}$ and/or current measurements $I_{string}$. Said decisions adopted by the power control unit 7 can be adopted based on the measurements 15 obtained by the measurement unit 6 and also taking into account the energy needs of the position control system 5, such as the activation power motor $P_{motor}$ to be able to drive the motor that positions the solar tracker and/or the ignition power $P_{on}$ necessary for the activation or ignition of the position control system 5.

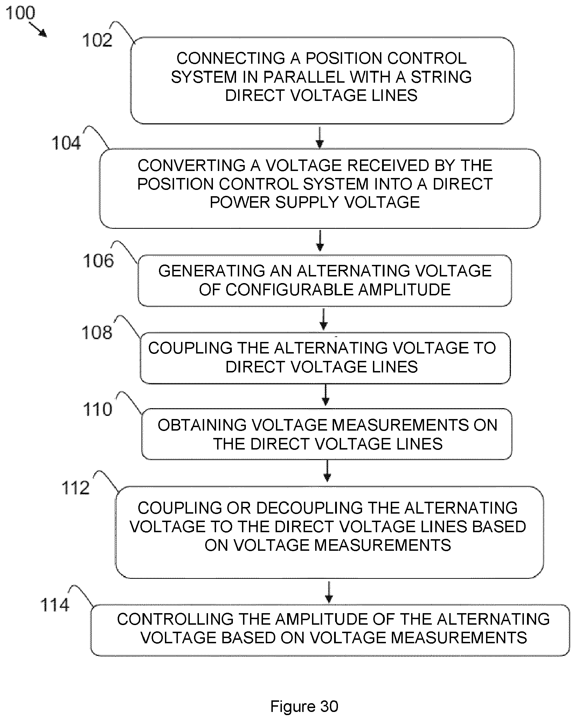

The present invention also relates to a method 100 for power supplying a solar tracker position control system 5, as represented in the flowchart of the embodiment shown in **Figure 30.** The method 100 comprises the following steps:

- Connecting 102 a power supply input 8 of a solar tracker position control system 5 in parallel with output direct voltage lines 3 from a set of solar panels 4 of the solar tracker.

- Converting 104 to a voltage $V_{string}$ received through the power supply input 8 in a direct power supply voltage $V^+$ with the same polarity.

- Generating 106 an alternating voltage $V_{AC}$ of configurable amplitude.

- Coupling 108 alternating voltage $V_{AC}$ to direct voltage lines 3.

- Obtaining 110 some measurements 15 on direct voltage lines 3 including voltage measurements $V_{string}$.

- Coupling or decoupling 112 the alternating voltage $V_{AC}$ to direct voltage lines 3 based on measurements 15 on direct voltage lines 3.

- When the alternating voltage is coupled $V_{AC}$ to direct voltage lines 3, controlling 114 the amplitude $V_{ACp}$ of alternating voltage $V_{AC}$ generated based on measurements 15.

In one embodiment, the step of coupling or decoupling 112 the alternating voltage $V_{AC}$ to direct voltage lines 3 is made based on a comparison of voltage measurements $V_{string}$ on direct voltage lines 3 with a threshold voltage $V_{TH}$.

In one embodiment, the step of controlling 114 the amplitude $V_{ACp}$ of alternating voltage $v_{AC}$ it is carried out in such a way that the total voltage in the direct voltage lines 3 does not exceed a maximum voltage $V_{open}$ that produces the set of solar panels 4 in open circuit.

**Claims**

1. A power supply system for a solar tracker position control system, comprising the power system (10):

    a position control system (5) of a solar tracker that includes a set of solar panels (4) connected in series, where the position control system (5) comprises:

    a power input (8) connected in parallel with output direct voltage lines (3) from the set of solar panels (4); and
    a voltage conversion unit (9) configured to obtain a direct supply voltage ($V^+$) from a voltage ($V_{string}$) received through the power input (8);

    an alternating voltage generation unit (1) configured to generate an alternating voltage ($V_{AC}$) of configurable amplitude;
    a coupling unit (2) through which the alternating voltage is coupled ($V_{AC}$) to the direct current lines (3);
    a measurement unit (6) configured to obtain measurements on the direct voltage lines (3) that include voltage measurements ($V_{string}$); and
    a power supply control unit (7) configured to couple or decouple the alternating voltage ($V_{AC}$) to the direct current lines (3) and control the amplitude ($V_{ACp}$) of the alternating voltage ($V_{AC}$) generated based on the measurements (15) obtained by the measurement unit (6).

2. The power supply system according to claim 1, wherein the power control unit (7) is configured to couple or decouple the alternating voltage ($V_{AC}$) to direct voltage lines (3) based on a comparison of voltage measurements ($V_{string}$) on the direct voltage lines (3) with a threshold voltage ($V_{TH}$).

3. The power supply system according to any of the preceding claims, wherein the power supply control unit (7) is configured to control the amplitude ($V_{ACp}$) of the alternating voltage ($V_{AC}$) so that the voltage ($V_{string}$) on direct voltage lines (3) do not exceed a maximum voltage ($V_{open}$) that produces the set of solar panels (4) in open circuit.

4. The power supply system according to any of the preceding claims, wherein the alternating voltage generation unit (1) comprises an alternating voltage source ($V_G$), a transformer (12a) or autotransformer (12b) with at least one socket (13a,13b), and a bidirectional switch (11a,11b) connected to each socket(13a,13b) and controlled by the power supply control unit (7).

5. The power supply system according to any of the preceding claims, wherein the voltage conversion unit (9) of the position control system (5) comprises a diode bridge (16) and a filter condenser (17).

6. The power supply system according to any of the preceding claims, wherein the coupling unit (2) comprises a condenser (C).

7. The power supply system according to claim 6, wherein the coupling unit (2) comprises at least one bidirectional switch (20,21,22) connected in series with the condenser (C) and controlled by the power supply control unit (7).

8. A method for power supplying a solar tracker position control system, comprising:

    connecting (102) a power input (8) of a position control system (5) of a solar tracker in parallel with output direct voltage lines (3) of a set of solar panels (4) of the solar tracker;
    converting (104) a voltage ($V_{string}$) received through the power input (8) in a direct power supply voltage ($V^+$);
    generating (106) an alternating voltage ($V_{AC}$) of configurable amplitude;
    coupling (108) the alternating voltage ($V_{AC}$) to the direct voltage lines (3);
    obtaining (110) some measurements (15) on the direct voltage lines (3) that include voltage measurements ($V_{string}$);
    coupling or decoupling (112) the alternating voltage ($V_{AC}$) to the direct voltage lines (3) based on the measurements (15) on the direct voltage lines (3); and
    controlling (114) the amplitude ($V_{ACp}$) of the alternating voltage ($V_{AC}$) generated based on the measurements (15) on the direct voltage lines (3).

9. The method according to claim 8, wherein coupling or decoupling (112) the alternating voltage ($V_{AC}$) to direct voltage lines (3) is performed based on a comparison of voltage measurements ($V_{string}$) on direct voltage lines 3 with a threshold voltage ($V_{TH}$).

10. The method according to any of claims 8 to 9, wherein controlling (114) the amplitude ($V_{ACp}$) of the alternating voltage ($V_{AC}$) is carried out in such a way that the total voltage in the direct voltage lines (3) does not exceed a maximum voltage ($V_{open}$) that produces the set of solar panels (4) in open circuit.

$R_{sh}$

$I_{short}$   $D$   $R_P$

Figure 1

Operation as photodiode
(Net consumption of
energy)

$I$

Irradiation

$+$

$I_{short}$

$I_{string}$

MPP

$V_{string}$

$V$

$-$

$V_{open}$

Null irradiation

Operation as photodiode
(Net consumption of
energy)

Figure 2

Figure 3

Energy Flow

$I_{short}$  $D$  String

$R_L$  Inverter

Control System

Figure 4

Figure 5

weather incidence: not enough energy

The tracker may maneuver

Night: without sufficient energy

The system produces energy

Night: without sufficient energy

The control system is power supplied

$P$

$P_{limit}$

$P_{mot}$
$P_{on}$

00:00

24:00

$t$

Morning twilight

Vespertine twilight

Figure 6

DC Power Supply

$C$

AC Power Supply

$I_F$  $D$

$T$

$V_G$

Control System

Figure 7

$I$

$I_{string}$  MPP

$V$

$V_{string}$

$V_{AC}$

Figure 8A

Figure 8B

Figure 9

DC Power Supply

Control System

Decision

$V_{coup}$

Figure 10A

AC Power Supply

Control System

Decision

$V_{coup}$

Figure 10B

Figure 11

Figure 12

Figure 13A

Figure 13B

Figure 14

Figure 15A

Figure 15B

Figure 16

Figure 17

Figure 18

Figure 19

Figure 20

Figure 21A

Figure 21B

Figure 22

Figure 23

Figure 24

Figure 25A

Figure 25B

Figure 25C

Figure 25D

Figure 25E

Figure 25F

Figure 26

Figure 27A

Figure 27B

Figure 27C

Figure 27D

Figure 28A

Figure 28B

Figure 29B

Figure 29C

Figure 29A

Figure 30

Europäisches
Patentamt

European
Patent Office

Office européen
des brevets

# EUROPEAN SEARCH REPORT

Application Number

EP 22 38 2712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/187192 A1 (JEANTY CEDRIC [US] ET AL) 29 June 2017 (2017-06-29) * figures 1, 3A, 8 * | 1-10 | INV. H02J3/38 |
| A | US 2014/008155 A1 (ROSSIGNOL ERIC [CH]) 9 January 2014 (2014-01-09) * figure 7 * | 1-10 | |
| A | US 2008/264474 A1 (FRAUENKNECHT HANA [CH] ET AL) 30 October 2008 (2008-10-30) * figure 5 * | 1-10 | |
| A | US 2019/356265 A1 (LIU YANG [US] ET AL) 21 November 2019 (2019-11-21) * figure 4 * | 1-10 | |
| | | | TECHNICAL FIELDS SEARCHED (IPC) H02J |

The present search report has been drawn up for all claims

| Place of search | Date of completion of the search | Examiner |
|---|---|---|
| Munich | 26 January 2023 | Ramcke, Ties |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2712

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2023

| Patent document cited in search report | Publication date | Patent family member(s) | Publication date |
|---|---|---|---|
| US 2017187192 A1 | 29-06-2017 | CN 106919187 A | 04-07-2017 |
| | | CN 115639847 A | 24-01-2023 |
| | | US 2017187192 A1 | 29-06-2017 |
| | | WO 2017116749 A1 | 06-07-2017 |
| US 2014008155 A1 | 09-01-2014 | AU 2012230560 A1 | 12-09-2013 |
| | | BR 112013020957 A2 | 11-10-2016 |
| | | CN 103582604 A | 12-02-2014 |
| | | CN 106026363 A | 12-10-2016 |
| | | CO 6811820 A2 | 16-12-2013 |
| | | EP 2500309 A1 | 19-09-2012 |
| | | EP 2686263 A1 | 22-01-2014 |
| | | ES 2544540 T3 | 01-09-2015 |
| | | IL 227223 A | 31-01-2017 |
| | | MX 339368 B | 20-05-2016 |
| | | PL 2686263 T3 | 30-10-2015 |
| | | PT 2686263 E | 21-09-2015 |
| | | SG 192570 A1 | 30-09-2013 |
| | | US 2014008155 A1 | 09-01-2014 |
| | | WO 2012126728 A1 | 27-09-2012 |
| US 2008264474 A1 | 30-10-2008 | DE 112006002999 A5 | 23-10-2008 |
| | | EP 1791184 A1 | 30-05-2007 |
| | | EP 1955381 A2 | 13-08-2008 |
| | | ES 2330073 A1 | 03-12-2009 |
| | | US 2008264474 A1 | 30-10-2008 |
| | | WO 2007062537 A2 | 07-06-2007 |
| US 2019356265 A1 | 21-11-2019 | AU 2019270244 A1 | 26-11-2020 |
| | | AU 2022201454 A1 | 24-03-2022 |
| | | CN 112292812 A | 29-01-2021 |
| | | EP 3794726 A1 | 24-03-2021 |
| | | US 2019356265 A1 | 21-11-2019 |
| | | US 2021091713 A1 | 25-03-2021 |
| | | US 2021273604 A1 | 02-09-2021 |
| | | WO 2019222707 A1 | 21-11-2019 |

EPO FORM P0459

For more details about this annex : see Official Journal of the European Patent Office, No. 12/82